# FASCICULE DE BREVET EUROPEEN

(11) **EP 1 561 087 B1**
(45) Date de publication et mention de la délivrance du brevet: **28.06.2006**
(21) Numéro de dépôt: 03782557.7
(22) Date de dépôt: 14.11.2003
(51) Int. Cl.: G01F 1/075, G01F 15/06, G05D 7/06

(54) **SYSTEME DE SURVEILLANCE DU DEBIT D'UN FLUIDE**
FLÜSSIGKEITSMENGE-ÜBERWACHUNGSSYSTEM
FLUID FLOW-MONITORING SYSTEM

(30) Priorité: 14.11.2002 FR 0214229
(43) Date de publication de la demande: 10.08.2005
(73) Titulaire: Hydrelis, 59000 Lille (FR)
(72) Inventeur: Sartorius, Thierry, F-62152 Hardelot (FR)
(74) Mandataire: Robert, Jean-Pierre
(86) Numéro de dépôt international: PCT/FR2003/003372
(87) Numéro de publication internationale: WO 2004/046656

(56) Documents cités:
- EP-A- 0 990 877
- DE-A- 19 723 189
- FR-A- 2 653 554
- US-A- 5 659 300
- US-A- 5 816 448

## Description

La présente invention concerne un dispositif énergétiquement autonome de sectionnement d'une canalisation de fluide notamment liquide comparable à un disjoncteur à l'entrée d'une installation électrique.

Au sens de l'invention il faut entendre par sectionnement d'abord la détection de l'existence ou de l'absence d'un débit de fluide dans la canalisation, au moyen d'un capteur susceptible d'émettre en sortie un signal de détection, ensuite l'interprétation de ce signal au moyen d'une unité d'interprétation, généralement électronique comprenant un microprocesseur ou un microcontrôleur programmé, enfin l'action décidée par l'unité d'interprétation se présentant sous la forme d'un signal de commande de l'actionneur lié à une vanne de coupure.

Au sens de l'invention également, énergétiquement autonome signifie qu'au moins l'actionneur ne tire l'énergie nécessaire à son fonctionnement que de l'énergie cinétique du fluide circulant dans la canalisation surveillée.

### ARRIERE PLAN DE L'INVENTION

Il existe de nombreux procédés et dispositifs pour surveiller un écoulement de fluide dans une conduite, que cette surveillance se traduise dans un comptage de consommation par exemple d'eau à usage domestique ou industriel, ou qu'elle se résume à la détection d'une fuite déclenchant une alarme ou une vanne de sectionnement ou d'isolement. On citera par exemple le document US 4 518 955 qui met en oeuvre un capteur électromagnétique à effet Hall du débit d'un fluide dans une canalisation dont le signal de sortie est exploité par un microcontrôleur pour, en fonction d'une programmation préétablie, commander ou non l'actionnement de vannes de sectionnement ou l'actionnement d'une alarme. Aucune indication n'est donnée dans ce document quant à la provenance de l'énergie consommée par le dispositif.

Dans le document FR 2 590 984, on décrit un détecteur d'anomalies dans l'écoulement d'un fluide qui, lorsque l'anomalie est un écoulement anormalement long du fluide, puise de l'énergie dans cet écoulement même, pour déclencher une vanne de sectionnement de la tuyauterie siège de cet écoulement. Ce dispositif requiert d'introduire dans la canalisation une perte de charge qui assure le fonctionnement du détecteur-actionneur. Ceci est très pénalisant notamment dans le cas d'une canalisation d'eau à usage domestique.

Dans de nombreux autres documents tels que le document US 5 153 564 et le document US 5 008 650, les dispositifs décrits font appel à une énergie électrique extérieure.

### OBJET DE L'INVENTION

La présente invention a pour objectif de supprimer les contraintes imposées par la fourniture d'une énergie électrique extérieure : établissement d'une ligne électrique d'alimentation d'un actionneur ou mise en place de batteries avec obligation d'en vérifier régulièrement la charge et l'état de fonctionnement..., sans pour autant altérer la circulation du fluide.

Ainsi, par l'invention on assure une fonction de sectionnement entièrement autonome donc d'installation simplifiée en n'importe quel endroit d'une conduite d'alimentation d'une installation de distribution d'eau à usage domestique, d'arrosage...

### BREVE DESCRIPTION DE L'INVENTION

L'invention a pour objet un dispositif de sectionnement d'une canalisation de fluide, comprenant un capteur de débit de fluide dans la canalisation, émettant en sortie un signal fonction de la quantité de fluide circulant dans cette canalisation, une unité électronique de traitement et d'exploitation du signal susdit et un organe de coupure avec des moyens d'actionnement réunis dans un appareil unique qui est traversé par un canal interne formant tronçon de canalisation et comportant à cet effet des organes de raccordement aux parties amont et aval de cette canalisation par rapport à ce tronçon, le dispositif comportant une source d'énergie électrique autonome constituée par une génératrice de courant alternatif, accouplée à une turbine animée par le débit de fluide circulant dans la canalisation et associée à au moins un accumulateur électrique, logés dans l'appareil unique, l'organe de coupure comportant un obturateur du canal interne mobile entre une première position d'ouverture du canal et une deuxième position d'obturation de ce dernier, les moyens d'actionnement de cet organe de coupure comportant un organe de rappel de l'obturateur en direction de sa deuxième position, un organe de manoeuvre manuelle de l'obturateur en direction de sa première position à l'encontre de l'effet de l'organe de rappel et un verrou de maintien de l'obturateur dans sa première position avec un actionneur électromagnétique et l'unité électronique comprenant un moyen de commande de l'alimentation électrique de l'actionneur électromagnétique par l'accumulateur.

On peut envisager différents modes de réalisation de la génératrice. Dans l'un d'eux l'accouplement entre la turbine et la génératrice est réalisé par une transmission surmultipliée à engrenages dont une roue dentée est accouplée magnétiquement sans contact à la turbine au travers d'une paroi du canal interne de l'appareil.

Dans une autre réalisation, la turbine est équipée de masses polaires formées par des aimants permanents qui tournent devant des bobinages fixes situés à l'extérieur d'une paroi du canal, le courant induit alternatif dans ces bobinages étant traité pour être accumulé de manière convenable. Sa fréquence constitue par ailleurs le signal représentatif du débit de fluide dans la canalisation.

D'autres caractéristiques et avantages de l'invention ressortiront de la description donnée ci-après de quelques exemples de sa réalisation.

### BREVE DESCRIPTION DES DESSINS

Il sera fait référence aux dessins annexés parmi lesquels :
- la figure 1 est un schéma de principe illustrant le système de surveillance selon l'invention,
- la figure 2 est une vue schématique d'un appareil formant une réalisation structurelle du système de la figure 1,
- la figure 3 est une vue de détail d'une disposition de la figure 2 au niveau de la génératrice,
- la figure 4 est une variante de réalisation de la génératrice mise en oeuvre dans l'appareil de l'invention,
- les figures 5 à 7 illustrent des variantes de réalisation des moyens de réarmement manuel du dispositif de l'invention.

### DESCRIPTION DETAILLEE DE L'INVENTION

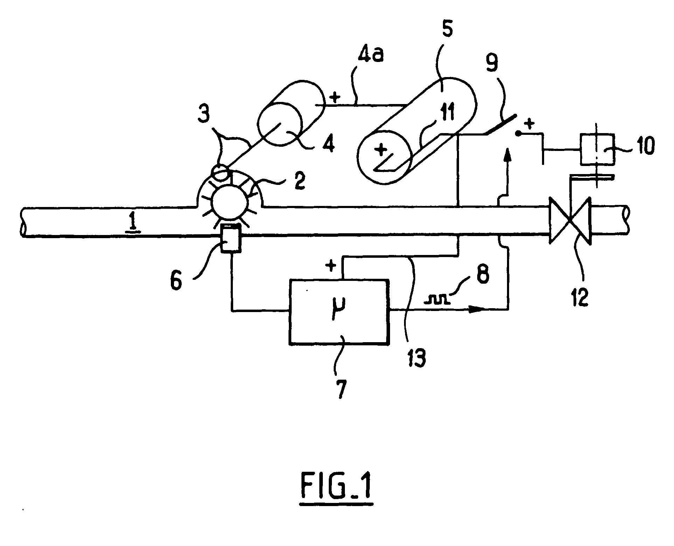

A la figure 1 on a représenté une conduite 1 de fluide, par exemple une conduite d'alimentation en eau d'une installation domestique. La circulation d'eau dans cette conduite 1 entraîne en rotation une turbine 2 qui est accouplée par une transmission 3 à une génératrice 4 de courant électrique dont la sortie 4a est reliée à un accumulateur 5.

Cette turbine 2 est associée à un détecteur de sa rotation 6 pour former ensemble un capteur du débit circulant dans la conduite 1. Le signal de sortie de ce détecteur 6 est envoyé à l'entrée d'un circuit électronique d'exploitation 7 comportant notamment un microcontrôleur programmé, lequel, en fonction du programme qu'il contient, délivre ou non un signal de sortie 8 en direction d'un interrupteur 9 d'alimentation d'un actionneur 10. L'interrupteur 9, commandé par le signal de sortie 8 du circuit d'interprétation 7, est disposé sur la ligne de puissance 11 d'alimentation de l'actionneur 10 provenant de la source d'énergie que constitue l'accumulateur 5.

L'actionneur 10 est formé par un actionneur électromagnétique d'un verrou de maintien dans son état d'ouverture d'une vanne de sectionnement 12 de la conduite 1 qui est normalement dans son état de fermeture lorsqu'elle est déverrouillée.

On notera que l'unité électronique 7 possède une alimentation 13 qui est ici dérivée de la ligne d'alimentation 11 issue de l'accumulateur 5. Ce n'est pas sortir du cadre de l'invention que de prévoir pour l'unité électronique 7 une batterie longue durée formant une source d'énergie auxiliaire pour par exemple maintenir ses circuits à l'état de veille.

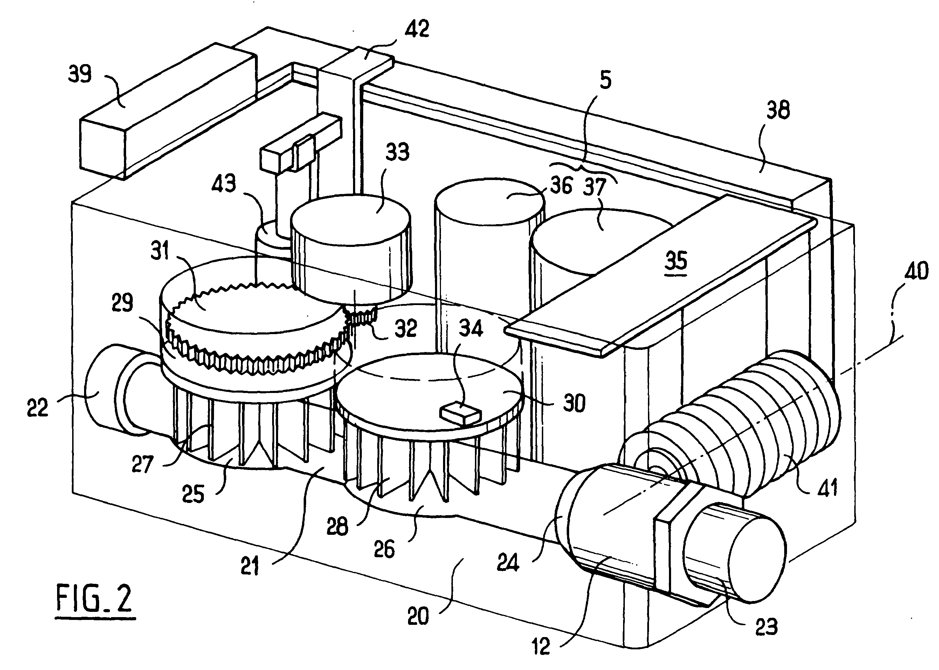

A la figure 2, on a schématiquement représenté les composants du système de la figure 1 réunis dans une unité fonctionnelle. Cette unité fonctionnelle comporte un corps sensiblement parallélépipédique 20, creusé d'un canal interne 21 qui forme un tronçon de canalisation. Ce canal interne 21 possède à l'une de ses extrémités des moyens 22 de son raccordement à une canalisation non représentée. A son autre extrémité, ce canal 21 est équipé d'une vanne 12, portant des moyens de connexion 23 à la canalisation à surveiller et possédant un boisseau sphérique 24. Le canal 21 vient en intersection avec des cavités 25, 26 dans lesquelles sont montées à rotation des turbines 27 et 28, ces cavités étant fermées hermétiquement par des couvercles 29, 30. La turbine 27 est accouplée à une roue dentée 31, laquelle coopère avec la roue dentée 32 d'entrée d'une génératrice 33. La turbine 28 coopère avec un détecteur 34 qui émet en sortie des impulsions proportionnelles au nombre de tours de la turbine 28. Par exemple la turbine 28 peut porter un aimant permanent qui, lorsqu'il passe au droit du détecteur 34, produit sur un interrupteur à lame souple que comporte ce détecteur 34, la fermeture d'un circuit électrique, donc engendre une impulsion dans ce circuit, lequel est relié à une unité électronique d'exploitation. Cette unité électronique d'exploitation se présente ici sous la forme d'une carte électronique 35 supportée par le corps 20. Deux condensateurs en série 36 et 37 sont électriquement reliés à la génératrice 33 pour former l'accumulateur 5 d'énergie précédemment décrit.

Dans une variante, le détecteur 34 peut être disposé au droit de la paroi 29 pour détecter la rotation de la turbine 27. L'appareil ne comprendrait alors qu'une seule turbine.

Le boisseau sphérique 24 de la vanne 12 est attelé à un levier de manoeuvre 38 terminé par une poignée 39. Le levier 38 peut tourner autour de l'axe 40 entre une position d'ouverture telle que celle représentée à la figure 2, dans laquelle la poignée 39 s'étend le long du support 20 et une position de fermeture obturant la canalisation dans laquelle la poignée 39 est située sensiblement à l'aplomb vertical de l'axe 40. Un ressort 41 tend à ramener le levier 38 dans la position d'obturation de la canalisation.

La poignée est représentée à la figure 2 rabattue sur le corps 20 et maintenue à l'encontre de l'effet du ressort 41 dans cette position par un verrou 42 qui peut être escamoté grâce à un actionneur électromagnétique 43 dont l'alimentation est reliée à l'accumulateur 37 au moyen d'un interrupteur commandé par le circuit électronique 35.

On prendra l'exemple de l'utilisation de l'appareil selon l'invention en liaison avec une installation de distribution d'eau domestique. L'appareil inséré sur la conduite générale d'alimentation de l'installation est normalement dans son état représenté à la figure 2, c'est-à-dire que la vanne à boisseau sphérique est ouverte. Une consommation normale de l'eau entraîne un flux dans le canal 21, ce débit ayant pour effet d'entraîner la turbine 27 et donc de produire grâce à la génératrice 33 une énergie électrique traitée par des moyens appropriés et stockée dans l'accumulateur formé par les deux capacités 36 et 37. Cette circulation engendre également la rotation de la turbine 28 et donc l'émission d'impulsions reconnue par le circuit électronique 35 et notamment par son microcontrôleur programmé comme étant le signe d'une consommation normale d'eau. On pourra par exemple avoir programmé dans le microcontrôleur du circuit électronique 35 le fait qu'une consommation normale d'eau est caractérisée par un temps de soutirage continu n'excédant pas quelques minutes ou quelques dizaines de minutes. Ainsi, si on détecte un temps de soutirage supérieur à ce seuil, il est probable que celui-ci soit significatif d'un fonctionnement anormal de l'installation et exige une intervention telle que la coupure de la canalisation. Dans ces conditions, le circuit électronique 35 commande l'alimentation de l'actionneur électromagnétique 43 qui escamote le verrou 42 permettant ainsi au levier 38 d'être rappelé par le ressort 41 dans la position de fermeture de la canalisation par le boisseau sphérique 24. Le réarmement du dispositif demande une intervention manuelle.

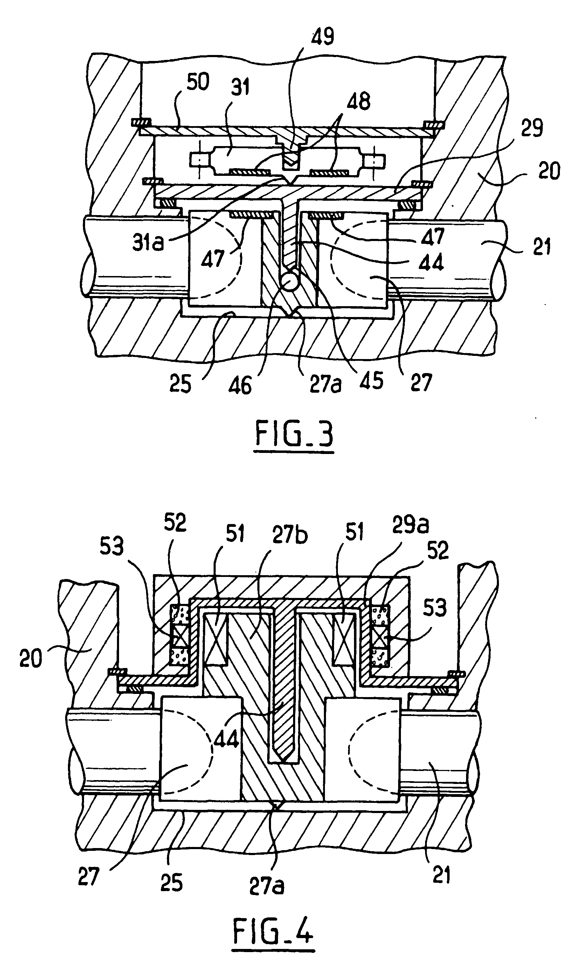

A la figure 3, on a représenté par une vue de détail et schématiquement, un mode de réalisation possible de la turbine 27 et de son accouplement avec la roue dentée 31. Cette turbine 27 est montée dans la cavité 25 à rotation sur une pointe 27a, cette cavité 25 étant fermée hermétiquement par un couvercle 29 qui possède également en son centre un pivot 44 de centrage de la turbine 27. La pointe inférieure 45 du pivot 44 repose sur une bille 46 de dureté suffisante pour supporter sans usure les efforts rencontrés dans ce montage. La turbine 27 possède des aimants 47 en partie supérieure faisant face au couvercle 29 tandis que la roue 31 possède en regard des aimants 48 de pôle opposé, pour être magnétiquement calée en rotation par rapport à la turbine 27. De même que précédemment, la roue 31 repose sur le couvercle 44 par une pointe 31a et reste centrée autour d'un pivot 49 appartenant à un support 50 maintenu sur le corps 20.

A la figure 4 la variante de réalisation représentée intègre en une seule pièce la turbine et la partie tournante de la génératrice. C'est ainsi que la turbine 27 possède une extension axiale 27b qui la surmonte et qui porte des aimants latéraux 51 de pôles alternés. Cette turbine est comme dans le cas précédent maintenue en place grâce à sa pointe 27a et au pivot 44 d'un couvercle 29a qui ici coiffe l'extension 27b de la turbine 27. Autour de ce couvercle 29a, on a disposé des enroulements 52 autour de pièces polaires 53 de sorte que les variations de champ magnétique dans les pièces polaires au passage des aimants 51 engendrent un courant induit alternatif dans les enroulements 52 qui est traité et conduit dans les accumulateurs 36 et 37 susdits. Cette génératrice multipolaire est avantageuse car elle peut produire suffisamment de courant même à une vitesse relativement faible de rotation de la turbine 27. Elle présente en outre l'avantage de constituer par elle-même le capteur de débit. En effet, la fréquence du courant induit est proportionnelle au débit circulant dans la conduite. Il suffit donc de relier la sortie de la génératrice à l'unité électronique pour que cette dernière puisse détecter la fréquence du courant engendré. Le microcontrôleur intégré dans l'unité électrique pourra alors procéder à tout traitement utile de cette fréquence. Si la fréquence détectée est basse, elle peut être le signe d'une fuite permanente. Si en revanche elle est au niveau correspondant à un soutirage normal mais sur une période de temps anormalement longue, elle sera le signe d'une rupture de canalisation (ce qui se rencontre notamment dans le cas d'installations d'arrosage automatique).

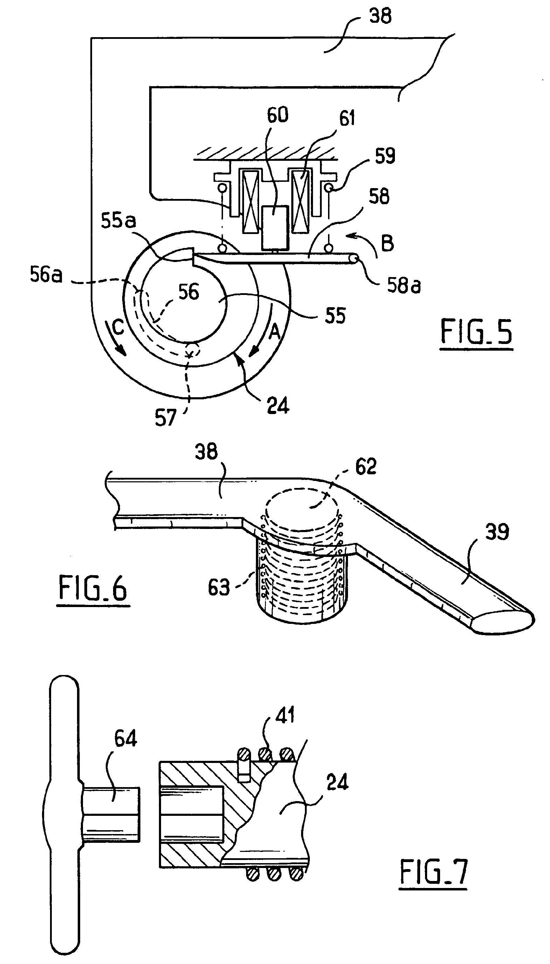

Les figures 5, 6 et 7 sont des vues de détail de variantes de réalisation de moyens de réarmement du dispositif.

A la figure 5 on a représenté l'extrémité de manoeuvre du boisseau sphérique tournant 24. A cette extrémité, ce boisseau comporte une roue à rochet simplifiée 55 qui est sollicitée par le ressort 41 dans le sens A. Le levier 38 est monté libre en rotation sur le boisseau au-delà de la roue 55. Il possède une lumière circulaire 56 dans laquelle un doigt 57 de la roue peut se déplacer. Un cliquet 58, articulé 58a sur le corps de l'appareil, est sollicité par un ressort 59 dans le sens B. Le cliquet est lié au noyau 60 d'un électro-aimant 61.

Une impulsion électrique provenant des condensateurs et commandée par l'unité électronique fait pivoter le cliquet 58 dans le sens contraire de B. Le cliquet échappe alors de la roue à rochet 55 qui peut tourner dans le sens A. Le boisseau est alors dans sa position d'obturation et le doigt 57 a atteint l'extrémité 56a de la lumière 56. Une manoeuvre manuelle du levier 38 dans le sens C entraîne par le doigt 57 la roue 55 jusqu'à ce que le cliquet vienne tomber derrière la dent 55a de la roue (dans le sens C). Le dispositif est alors réarmé. Le levier 38 est alors librement rabattu le long du corps de l'appareil.

A la figure 6 on a représenté un moyen de maintien du levier 38 équivalent au verrou 42, qui consiste en une ventouse magnétique 62 (aimant permanent) sur laquelle vient coller le levier. Cet aimant est placé au centre d'une bobine 63 qui, lorsqu'elle est parcourue par un courant, engendre un champ magnétique inverse de celui de l'aimant. Le levier est alors libéré et le boisseau peut se fermer.

A la figure 7 on a simplement illustré le fait que dans le cas par exemple de la figure 4, le levier 38 peut être conçu comme un carré de manoeuvre 64 du boisseau, pour réarmer l'appareil, ce carré pouvant ensuite être découplé du boisseau et rangé à proximité de l'appareil. Les liaisons entre levier et boisseau décrites au regard des figures 4 et 6 sont appelées liaisons débrayables.

On notera enfin qu'il est possible d'utiliser l'appareil de l'invention comme une vanne d'isolement général de l'installation. Il suffit de prévoir un organe de commande manuelle auxiliaire (par exemple un bouton poussoir) qui lorsqu'il est actionné forme un interrupteur pour créer une alimentation électrique du verrou électromagnétique et donc une libération du boisseau ramené dans son état de fermeture par le ressort 41. Il est préférable, dans ce cas, de prévoir une réalisation du type des figures 4 et 6 où la fermeture n'entraîne pas de mouvement du levier 38 qui pourrait surprendre voir blesser la personne ayant agi sur le bouton.

## Revendications

1. Dispositif de sectionnement d'une canalisation (21) de fluide, comprenant un capteur (28, 34) de débit de fluide dans la canalisation, émettant en sortie un signal fonction de la quantité de fluide circulant dans cette canalisation, une unité électronique de traitement et d'exploitation du signal susdit et un organe de coupure avec des moyens d'actionnement (38, 39, 41) réunis dans un appareil unique qui est traversé par un canal interne (21) formant tronçon de canalisation et comportant à cet effet des organes de raccordement (22, 23) aux parties amont et aval de cette canalisation par rapport à ce tronçon (21), **caractérisé en ce qu'**il comporte une source d'énergie électrique autonome constituée par une génératrice (4) de courant alternatif, accouplée à une turbine (27) animée par le débit de fluide circulant dans la canalisation et associée à au moins un accumulateur électrique (36, 37), logés dans l'appareil unique, **en ce que** l'organe de coupure comporte un obturateur (24) du canal interne (21) mobile entre une première position d'ouverture du canal et une deuxième position d'obturation de ce dernier, les moyens d'actionnement de cet organe de coupure comportant un organe de rappel (41) de l'obturateur en direction de sa deuxième position, un organe de manoeuvre (38, 39) manuelle de l'obturateur en direction de sa première position à l'encontre de l'effet de l'organe de rappel et un verrou (42) de maintien de l'obturateur dans sa première position avec un actionneur électromagnétique (43) et **en ce que** l'unité électronique comprend un moyen de commande de l'alimentation électrique de l'actionneur électromagnétique (43) par l'accumulateur.

2. Dispositif selon la revendication 1, **caractérisé en ce que** la génératrice forme le capteur susdit, le signal étant constitué par la fréquence du courant généré.

3. Dispositif selon la revendication 1 ou la revendication 2, **caractérisé en ce que** l'unité électronique (7, 35) de traitement des signaux du capteur (28, 34) et de commande de l'alimentation électrique de l'actionneur électromagnétique (43) par l'accumulateur (36, 37), est logée dans l'appareil unique.

4. Dispositif selon la revendication 3, **caractérisé en ce que** l'appareil unique comporte un corps (20) creusé du canal interne, équipé des moyens de raccordement (22, 23) de ce dernier à une canalisation et formant le support unique de la génératrice (33), de l'accumulateur (36, 37), de l'unité (7, 35) électronique du verrou (42) et de l'actionneur (43).

5. Dispositif selon l'une des revendications 1 à 4, **caractérisé en ce que** le verrou est formé par une roue à rochet (55) solidaire de l'obturateur (24), d'un cliquet (58) coopérant avec la roue à rochet pour s'opposer à sa rotation dans un sens (A) et d'un électro-aimant (60, 61) de commande de l'échappement du cliquet (58).

6. Dispositif selon l'une quelconque des revendications précédentes, **caractérisé en ce que** l'organe de manoeuvre manuelle est attelé de manière débrayable à l'obturateur.

## Claims

1. A disconnector device for a fluid pipe (21), the device comprising a sensor (28, 34) for sensing the flow of fluid in the pipe, outputting a signal that is a function of the quantity of fluid flowing in said pipe, an electronic processor and control unit responsive to said signal, and a cut-off member having actuator means (38, 39, 41) united in a single apparatus having an internal channel (21) passing therethrough and forming a segment of the pipe, the channel being provided for this purpose with coupling members (22, 23) for coupling to portions of said pipe that are upstream and downstream from said segment (21), the device being **characterized in that** it includes an independent source of electrical energy constituted by an alternating current generator (4) coupled to a turbine (27) driven by the flow of fluid flowing in the pipe and associated with at least one electricity storage unit (36, 37) housed in the single apparatus, **in that** the cut-off member comprises a shutter (24) closing off the internal channel (21) and movable between a first position in which the channel is open and a second position in which the channel is shut, the means for actuating said cut-off member comprising a return member (41) for urging the shutter towards its second position, a manual drive member (38, 39) for the shutter for driving it towards its first position against the effect of the return member, and a latch (42) for holding the shutter in its first position with an electromagnetic actuator (43), and **in that** the electronic unit includes means for controlling the supply of electrical power to the electromagnetic actuator (43) from the storage unit.

2. A device according to claim 1, **characterized in that** the generator forms the above-mentioned sensor, the signal being constituted by the frequency of the current it generates.

3. A device according to claim 1 or claim 2, **characterized in that** the electronic unit (7, 35) for processing the signals from the sensor (28, 34) and for controlling the supply of electrical power to the electromagnetic actuator (43) from the storage unit (36, 37) is housed in the single apparatus.

4. A device according to claim 3, **characterized in that** the single apparatus comprises a body (20) having the internal channel hollowed out therein, fitted with means (22, 23) for coupling the channel to a pipe and forming the sole support for the generator (33), the storage unit (36, 37), the electronic unit (7, 35), for the latch (42), and for the actuator (43).

5. A device according to any one of claims 1 to 4, **characterized in that** the latch is formed by a ratchet wheel (55) secured to the shutter (24), a pawl (58) cooperating with the ratchet wheel to oppose rotation thereof in one direction (A), and an electromagnet (60, 61) for causing the pawl (58) to escape.

6. A device according to any one of the preceding claims, **characterized in that** the manual drive member is coupled in declutchable manner to the shutter.

## Patentansprüche

1. Vorrichtung zum Unterbrechen einer Fluidleitung (21), umfassend einen Sensor (28, 34) zum Erfassen des Fluiddurchsatzes in der Leitung, wobei der Sensor am Ausgang ein Signal abgibt, das von der Fluidmenge abhängt, die in dieser Leitung zirkuliert, eine elektronische Verarbeitungs- und Auswertungseinheit zum Verarbeiten und Auswerten des oben genannten Signals, sowie eine Sperrvorrichtung mit Betätigungsmitteln (38, 39, 41), die in einem einzigen Gerät zusammengefasst sind, das von einem Innenkanal (21) durchsetzt ist, der einen Leitungsabschnitt bildet und zu diesem Zweck Verbindungselemente (22, 23) zur Verbindung mit dem stromaufwärtigen und dem stromabwärtigen Abschnitt dieser Leitung in Bezug auf diesen Abschnitt (21) hat, **dadurch gekennzeichnet, dass** sie eine autonome Stromquelle umfasst, die aus einem Wechselstromgenerator (4) gebildet ist, der an eine Turbine (27) angeschlossen ist, die von dem in der Leitung zirkulierenden Fluiddurchsatz angetrieben wird und mit mindestens einem elektrischen Akkumulator (36, 37) verbunden ist, die alle in dem einzigen Gerät untergebracht sind, dass die Sperrvorrichtung ein Schließelement (24) zum Verschließen des Innenkanals (21) hat, das zwischen einer ersten Offenstellung zur Freigabe des Kanals und einer zweiten Schließstellung zum Verschließen dieses letztgenannten beweglich ist, wobei die Betätigungsmittel zum Betätigen dieser Sperrvorrichtung ein Rückstellelement (41) zum Rückstellen des Schließelements in Richtung seiner zweiten Stellung, ein manuelles Stellelement (38, 39) zum manuellen Verstellen des Schließelements in Richtung seiner ersten Stellung entgegen der Wirkung des Rückstellelements sowie einen Riegel (42) zum Halten des Schließelements in seiner ersten Stellung umfassen; der einen elektromagnetischen Aktuator (43) hat, und dass die elektronische Einheit Steuermittel zum Steuern der elektrischen Versorgung des elektromagnetischen Aktuators (43) durch den Akkumulator umfasst.

2. Vorrichtung nach Anspruch 1, **dadurch gekennzeichnet, dass** der Generator den oben genannten Sensor bildet, wobei das Signal aus der Frequenz des erzeugten Stroms gebildet wird.

3. Vorrichtung nach Anspruch 1 oder Anspruch 2, **dadurch gekennzeichnet, dass** die elektronische Einheit (7, 35) zum Verarbeiten der Signale des Sensors (28, 34) und zum Steuern der elektrischen Versorgung des elektromagnetischen Aktuators (43) durch den Akkumulator (36, 37) in dem einzigen Gerät untergebracht ist.

4. Vorrichtung nach Anspruch 3, **dadurch gekennzeichnet, dass** das einzige Gerät ein von dem Innenkanal durchsetztes Gehäuse (20) umfasst, das mit Verbindungsmitteln (22, 23) zur Verbindung des Innenkanals mit einer Leitung ausgestattet ist und das den einzigen Träger für den Generator (33), den Akkumulator (36, 37), die elektronische Einheit (7, 35), den Riegel (42) und den Aktuator (43) bildet.

5. Vorrichtung nach einem der Ansprüche 1 bis 4, **dadurch gekennzeichnet, dass** der Riegel aus einem Sperrrad (55) gebildet ist, das fest mit dem Schließelement (24), einer Sperrklinke (58), die mit dem Sperrrad zusammenwirkt, um sich dessen Drehung in eine Richtung (A) zu widersetzen, sowie mit einem Elektromagneten (60, 61) zum Steuern des Ausrückens der Sperrklinke (58) verbunden ist.

6. Vorrichtung nach einem der vorhergehenden Ansprüche, **dadurch gekennzeichnet, dass** das manuelle Stellelement auf ausrückbare Weise mit dem Schließelement verbunden ist.
